(19) Europäisches Patentamt
European Patent Office
Office européen des brevets

(11) EP 0 860 819 A2

(12) **EUROPEAN PATENT APPLICATION**

(43) Date of publication:
26.08.1998 Bulletin 1998/35

(51) Int Cl.6: **G11B 7/12**

(21) Application number: **98301325.1**

(22) Date of filing: **24.02.1998**

(84) Designated Contracting States:
**AT BE CH DE DK ES FI FR GB GR IE IT LI LU MC NL PT SE**
Designated Extension States:
**AL LT LV MK RO SI**

(30) Priority: **24.02.1997 US 805084**

(71) Applicant: **Hoetron, Inc.**
**Sunnyvale, California 94086 (US)**

(72) Inventor: **Lee, Wai-Hon**
**Cupertino, California 95014 (US)**

(74) Representative:
**Cross, Rupert Edward Blount et al**
**BOULT WADE TENNANT,**
**27 Furnival Street**
**London EC4A 1PQ (GB)**

(54) **Optical pickup using two semiconductor lasers with different wavelengths**

(57) A new optical pickup using two lasers with different wavelengths and a common objective lens to produce spots suitable to read low density as well as high density discs. In one embodiment, a separate detector is used for each laser, with each detector being positioned at a different distances from its corresponding laser to compensate for the effect of the different wavelength on the location of the reflected beam.

Fig. 6

## Description

## BACKGROUND OF THE INVENTION

The present invention relates to holographic optical pickups (optical heads) used for reading CD-ROM, and in particular to optical pickups for both high and low density CD-ROMs.

Recently there is a strong Interest in pushing the storage capacity of compact discs to as much as many gigabytes from the current 640 megabytes. Such a high capacity is desired for Digital Video discs (DVD). In order to achieve this high capacity, the track spacing on these high density discs is reduced from the current 1.6 micrometers used in the compact disc to about 0.8 micrometer. The linear density along the track would also double by using smaller markings or pits on the disc.

In order to read this new type of disc, optical pickups using a short wavelength laser with a wavelength ranging from 635 nm to 650 nm, and a 0.6 NA (Numerical Aperture) objective lens have been developed. There should be no technological difficulty in producing such optical pickups. The short wavelength laser and the high NA objective lens are both available in the market. However, the pickup as described above will not be suitable for reading the current low density CD-ROM discs due to the small spot size.

There have been a number of solutions to this compatibility problem. One solution is to implement an optical pickup with two objective lenses. One objective lens has a numerical aperture of 0.6 and the other has a numerical aperture of 0.45. In such an optical pickup, using a single laser diode with a 635 nm wavelength, the spot size for reading the high density disc is equal to 0.53 micrometers and the spot size for the low density disc is 0.71 micrometers. A second solution would be to put an electronically controlled aperture in front of the objective lens. When it is necessary to read the low density disc, the variable aperture is reduced to give an effective numerical aperture of 0.45 or less. A third solution to this problem is to use two pickups, one of which uses a 780 nm wavelength laser and an objective lens with 0.45 NA and the second of which uses 635 nm laser and an objective lens with 0.6 NA.

In this present invention we describe the use of two semiconductor lasers with two different wavelengths in a single pickup to solve the backward compatibility requirements for the optical pickups. In a prior art patent, U.S. Patent 4,757,197, the use of two laser chips in a single integrated device has been described. The discussion to follow gives a summary of this prior art patent and serves as a basis for illustrating the embodiments of the present invention.

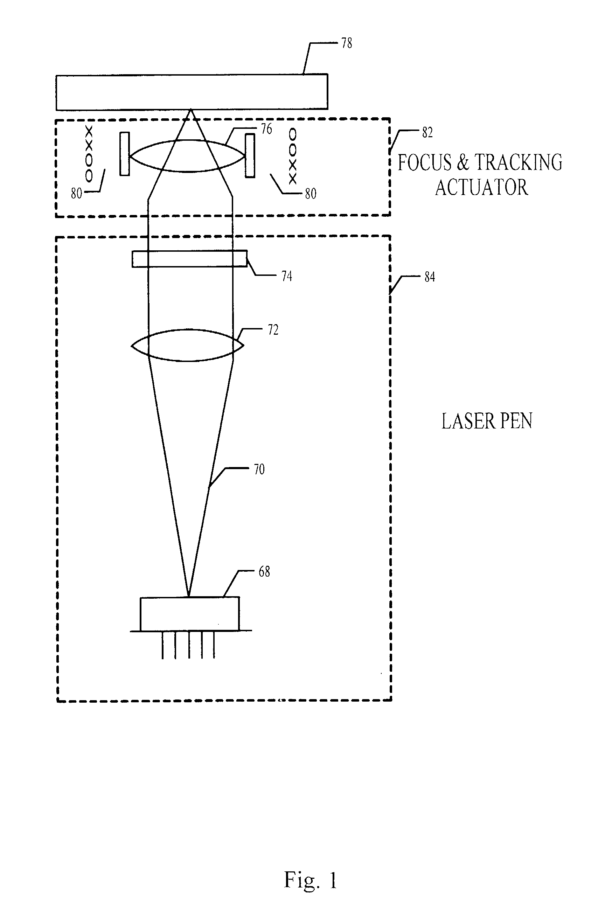

Fig. 1 illustrates an example of an optical pickup using an integrated laser and detector device described in U.S. Patent 4,731,772. The laser/detector device 68 emits a beam of light 70 which passes through a collimating lens 72 and a hologram 74 and is focused by objective lens 76 on a medium 78. The objective lens 76 can be moved up and down and sideways in the actuator assembly 82 which also contains magnets and coil 80. The optical portion of the optical pickup sometimes is called a laser pen 84. The collimator lens 72 can be eliminated by using a finite conjugate objective lens that can image the laser directly to the medium. The spot size on the medium is determined by the laser wavelength and the numerical aperture of the lens according to the following formula:

$$\text{Spot diameter} = \text{wavelength} / (2 \times NA).$$

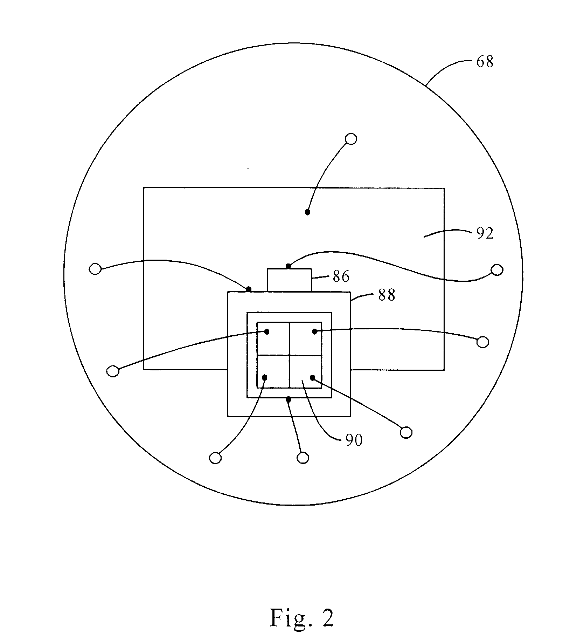

Fig. 2 shows the detail of the laser and detector device 68. Inside package 68 there is a laser chip 86 and a detector 90, both of which are mounted on a common heatsink 88. The detector chip 90 is mounted on a top surface of the heatsink and the laser chip is mounted on a side surface of the heatsink so that the optical axis of the emitted laser beam is perpendicular to the detector surface. In this prior art device shown in U.S. Patent 4,731,772 there is only one laser chip inside the device. Another U.S. Patent 4,757,197 described laser and detector devices having two semiconductor lasers.

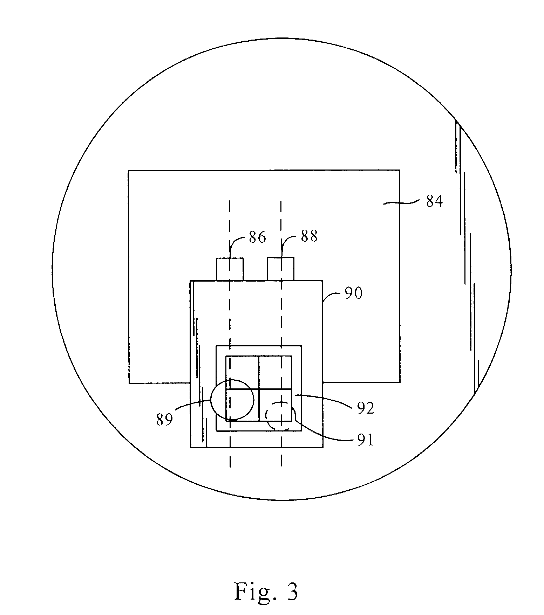

Fig. 3 shows one of such laser and detector device. Two lasers 86, 88 are mounted on one surface of the heatsink 90 with a common detector 92 mounted on a second surface of the heatsink normal to the first surface. In this prior art design the diffracted beams returned from a common hologram are shown by the two circles in Fig. 3. The solid circle 89 is the diffracted beam corresponding to laser chip 86 and the dotted circle 91 corresponds to laser chip 88. As can be seen, neither of the beams is aligned with the common quadrant detector. The amount of error is dependent on the distance between the two laser chips which is typically about 0.436 mm.

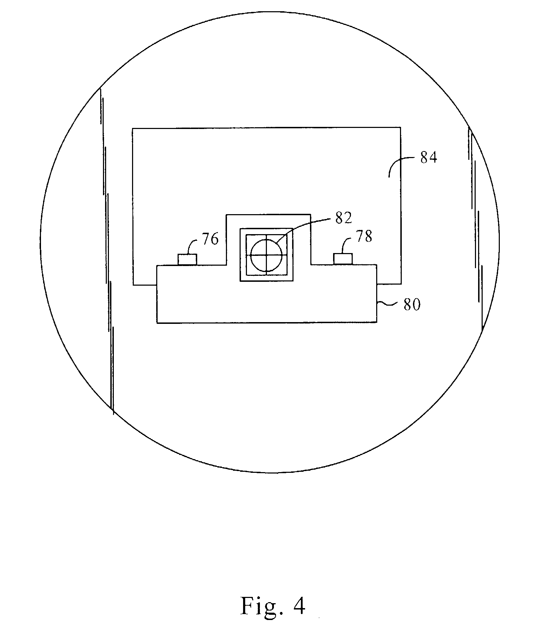

Fig. 4 shows another prior art device described in U.S. Patent 4,757,197 with two laser chips 76 and 78 and a common detector 82. In this case both diffracted beams can be aligned perfectly on the detector 82 as shown by the circle. However, due to the dimension of the detector, which is about 0.5 mm, the two lasers 76 and 78 are each at least 0.5 mm from the optical axis defined by the center of the detector. As a result the laser beam focused on the medium will suffer from off-axis aberrations of the objective lens. A typical tolerance for an objective lens is about 0.2 mm.

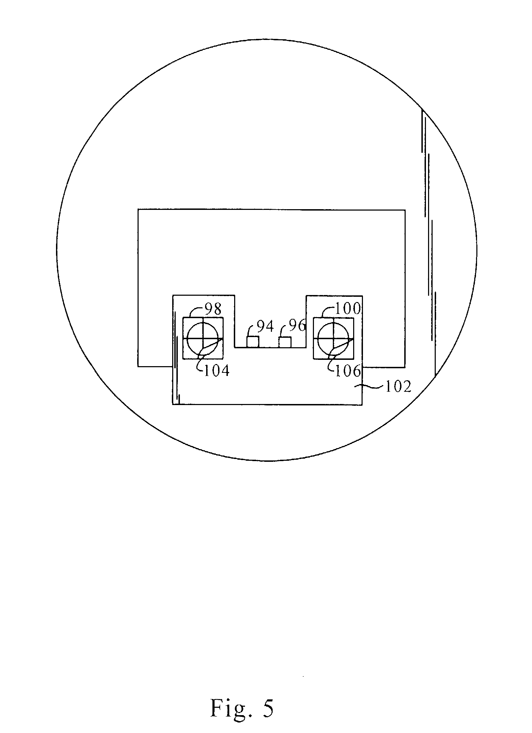

Fig. 5 illustrates yet another prior art device with two lasers 94 and 96. In this device, when laser 94 is turned on, the returned beam will be diffracted into a +1 diffracted order and a -1 diffracted order. The +1 diffracted order beam will fall on the detector 98. When laser 96 is turned on, the -1 diffracted order from the returned beam will fall on detector 100. In order for the diffracted beam from either laser to properly focus on its respective detector, the lasers and the detectors have to be substantially on the same plane.

## SUMMARY OF THE INVENTION

The present intention provides a new optical pickup using two lasers with different wavelengths and a common objective lens to produce spots suitable to read low density as well as high density discs. The invention overcomes the limitations of the prior art devices as shown in Fig. 3 to Fig. 5.

In one embodiment, a separate detector is used for each laser, with each detector being positioned at a different distances from its corresponding laser to compensate for the effect of the different wavelength on the location of the reflected beam. In another embodiment, a single detector is used, but with the lasers being at different distances from the single detector.

## BRIEF DESCRIPTION OF THE DRAWINGS

Fig. 1 shows a prior art optical pickup using a hologram lens.

Fig. 2 shows a prior art laser and detector device in the optical head of Fig. 1.

Fig. 3 shows a prior art device with two lasers and a single detector in the same package.

Fig. 4 shows another prior art device with two lasers on either side of a single detector in a package.

Fig. 5 shows a third prior art device with two lasers and two detectors in a package.

Fig. 6 shows a first embodiment of the present invention with two lasers and two differently spaced detectors.

Fig. 7 shows a second embodiment of the present invention with a single detector and differently spaced lasers.

Fig. 8 shows a third embodiment of the present invention with a reflective surface of the detector chip reflecting the laser beam.

Fig. 9 shows a side view of the third embodiment of the present invention of Fig. 8.

Fig. 10 shows an optical pickup system using the lasers and detector devices of this invention.

Fig. 11 is a diagram illustrating the calculation of the laser separation distance for the single detector embodiment of Fig. 7.

Fig. 12 is a diagram illustrating the calculation of the placement of the photodetectors for the embodiment of Fig. 6.

## DESCRIPTION OF THE PREFERRED EMBODIMENT

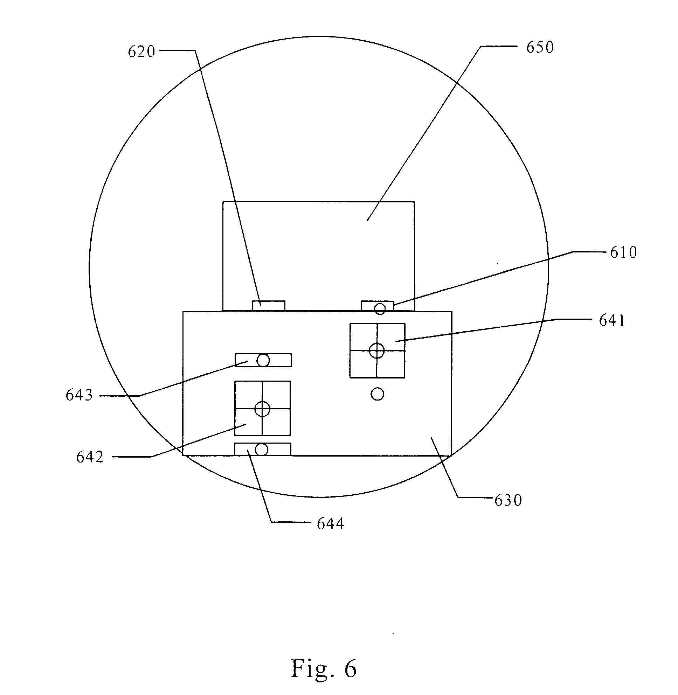

Fig. 6 shows a first embodiment of the present invention. Two laser chips 610 and 620 are mounted on one side surface of the heatsink 630. Two quadrant detectors 641 and 642 are mounted on the top surface of the heatsink. The center distance between the two quadrant detectors is designed to match the distance between the two lasing points from the two laser chips. It is well known that the diffraction angle caused by a hologram is related to the spatial frequency of the hologram according to the formula:

$$\text{SIN (Diffraction angle)} = \text{wavelength x spatial frequency.}$$

Hence, with the spatial frequency of the hologram fixed, a laser beam with a longer wavelength will have a larger diffraction angle. Since laser 610 has a shorter wavelength than the wavelength of laser 620, the distance between laser chip 610 and its quadrant detector is also shorter than the distance between laser chip 620 and its quadrant detector. To use this device in reading the high and low density discs, a laser chip with wavelength such as 635 nm and a laser chip with a longer wavelength such as 860 nm are selected. As a result, when the 635 nm laser is turned on, a laser spot of about 0.54 micrometers is focused on the medium. On the other hand, when the 860 nm laser chip is turned on, a laser spot of about 0.72 micrometers is focused on the medium.

When this device is used in place of the device 68 of Fig. 1 in an optical pickup, the pickup can perform the dual functions of reading the low density and high density discs. There will be no change in the optical pickup design except for the change from a one laser device to a two laser device.

The detector also contains two additional detector elements 643 and 644. These two extra detector elements can be used in connection with a well-known three beam tracking technique. The circles shown on the detectors in Fig. 6 are the diffracted beams returned from the medium. By using an appropriate hologram, the returned beam can be directed to the optimal position. Since two different wavelengths are used, however, each detector must be appropriately positioned.

It can be seen that three beam tracking is not utilized for the short wavelength system. This is because typical new DVD devices use a single beam, and not the three beam tracking used in older, long wavelength devices. Alternately, three beam tracking could be used for both or neither laser. A rear-emission detector 650 is mounted directly below the two semiconductor lasers for the purpose of detecting the back emissions from the two semiconductor lasers for feedback control of the power of the lasers. A single rear-emission detector is used since only one laser will be active at a time.

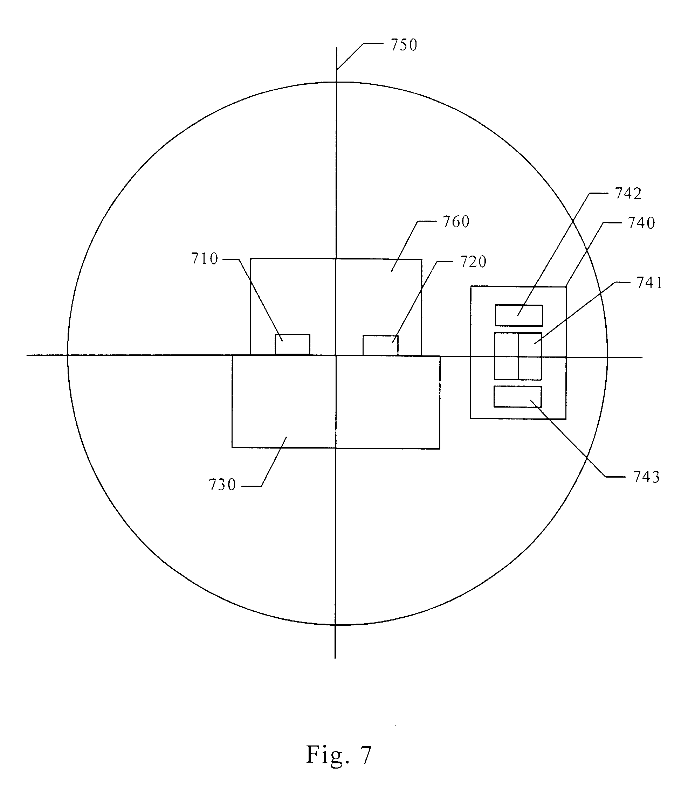

Fig. 7 shows a second embodiment of this invention. Two laser chips 710 and 720 are mounted on a heatsink 730. A detector chip 740 with a single quadrant detector 741 is mounted on the same plane as the heatsink. As a result, the emitting surface and the surface of the detector are on substantially different planes. The hologram can be used to direct the returned beam to a different plane, and this allows for simpler construction by not requiring the lasers and detector to be in the same plane. The two laser chips are positioned symmetrically about a surface 750 containing the optical axis. Sometimes it is also desirable to have one of the laser chips aligned on the optical axis with the second laser off the optical axis. In this embodiment the laser chip with the longer wavelength will be at a further distance from the detector. Therefore, laser 710 has a longer wavelength than laser 720. Two additional detector elements 742 and 743 are shown for the three beam tracking used by the long wavelength laser diode. A second detector 760 is mounted directly below the two semiconductor lasers for the purpose of detecting the back emission from the two semiconductor lasers.

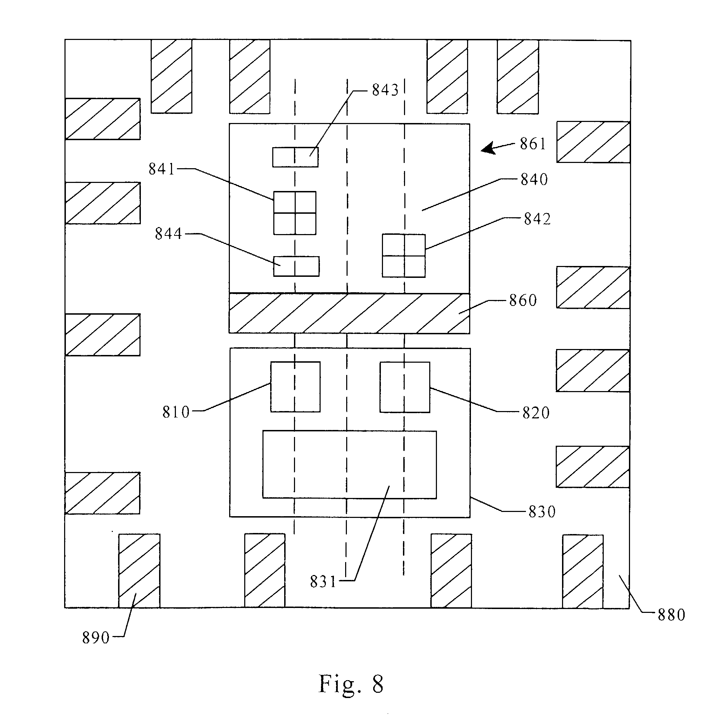

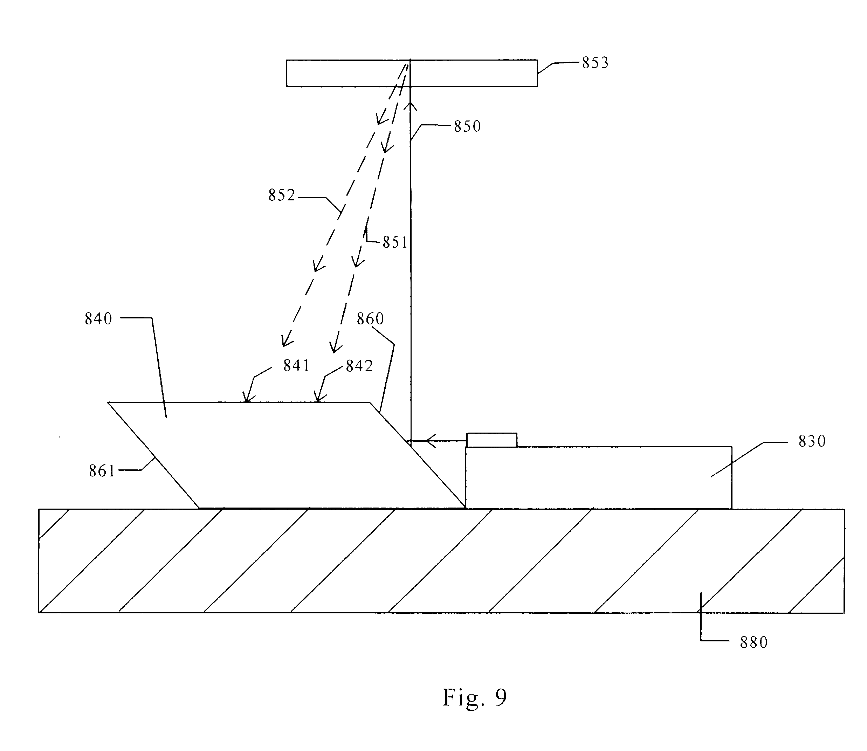

Fig. 8 shows a top view of the third embodiment. Two laser chips 810 and 820 are mounted on a detector chip 830. A rear-emission detector 831 is located behind the laser chips to collect the back emission of the laser chips for the purpose of monitoring the laser power. In front of the detector chip 830 is another detector chip 840. Two quadrant detectors 841 and 842 are fabricated on the top surface of detector 840. The two detectors 830 and 840 are aligned so that the optical axis of the laser 810 and the center of the quadrant detector 841 are co-planar. A similar situation also holds for laser 820 and detector 842. It can be noted that quadrant detector 841 is at a further distance from the edge of the detector than the quadrant detector 842, because the laser chip 831 emits at a longer wavelength than laser chip 832. Detector 840 is cleaved to produce two 45 degree surfaces 860 and 861 in front and behind the detector, as can be better seen in Fig. 9. Both sides are cleaved at an angle when multiple detectors on a wafer are sliced, but only side 860 being at an angle is used in this invention.

Figure 9 shows a side view of these two detectors 830 and 840. The 45-degree surface 860 of the detector 840 facing the detector 830 is coated with a dielectric reflective coating to act as a mirror to reflect the laser beams upward along a plane indicated by line 850. A hologram lens 853 directs long wavelength beam 852 to detector 841, and short wavelength beam 851 to detector 842. Detector 840 also contains two detector elements 843 and 844 for the three beam tracking. Both detectors 830 and 840 are mounted on a plastic base with metal leads. The detector elements on detector 830 and 840 are wire bonded to the different leads on the base structure.

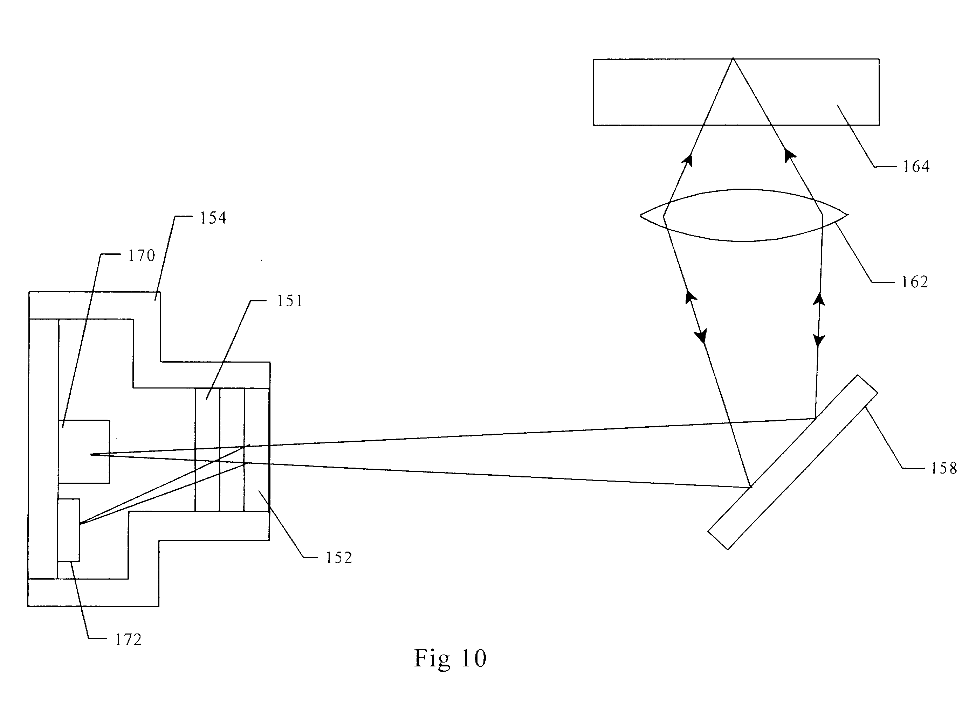

Fig. 10 shows an embodiment of an optical pickup of the present invention. A laser and detector device 154 emits a laser beam through a three beam grating 151 and a hologram lens 152. The undiffracted beam (or 0 order) beam from the hologram is reflected by mirror 158 and focused by objective lens 162 on a medium 164. Mirror 158 is included to fit thin profile requirements. Alternately, the mirror could be eliminated and device 154 could direct a beam straight at objective lens 162. The returned beam from the medium will again pass through the objective lens 162 and be reflected by the mirror and impinge on the hologram lens 152. A diffracted beam from the hologram lens will project the returned beam onto the detector elements on the inside of the device 154.

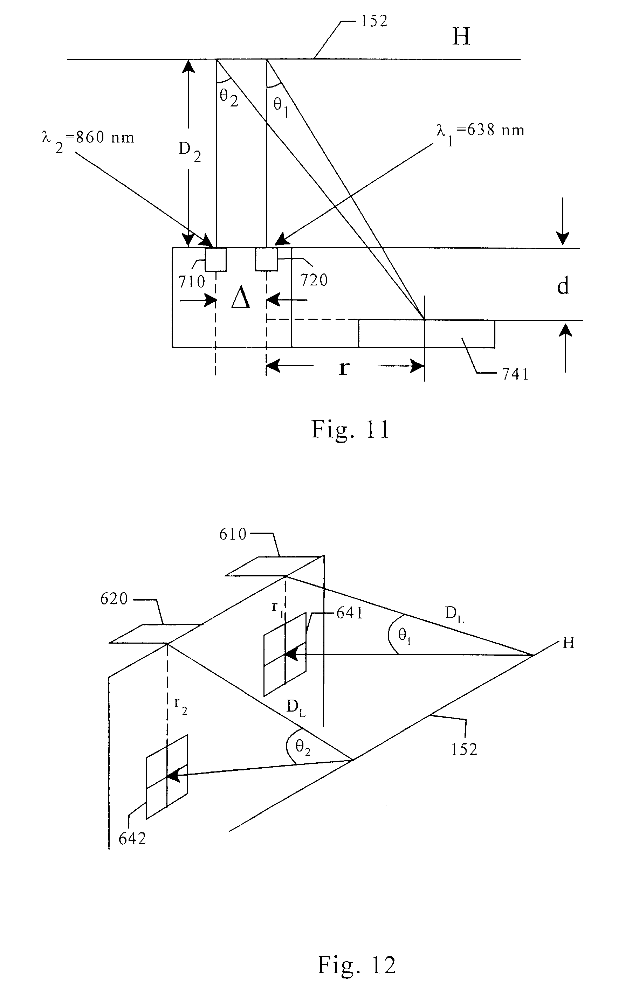

Fig. 11 illustrates how the distance between the lasers, $\Delta$, is calculated. The following equations represent the different angles and distances in Fig. 11:

$$\tan\phi_1 = \frac{r}{D_L + d} \tag{1}$$

$$\tan\phi_2 = \frac{r + \Delta}{D_L + d} \tag{2}$$

$$grating\ period\ T = \frac{\lambda_1}{\sin\phi_1} = \frac{\lambda_2}{\sin\phi_2} \tag{3}$$

$$\therefore \Delta = (D_L + d)\tan\phi_2 - r \tag{4}$$

Choosing a distance r of 1mm, a distance d (the set back of the face of photodetector 741 from the emitting surface of lasers 710, 720) of 1mm, a distance $D_L$ (from the emitting surface of the lasers to hologram lens 152) of 6mm, we can solve for $\phi_1$, giving $\phi_1 = 8.13°$. The grating period T (the inverse of the hologram spacial frequency) can then be determined using a wavelength $\lambda_1$ of 635 nm to give T = 4.49 um. $\phi_2$ can then be calculated using equation 3 to give 11.04°. Finally, $\Delta$ can be solved to give $\Delta = 0.366$nm. The values of $\lambda_1$ and $\lambda_2$ are usually dictated by the size of spot needed for the spacing on the optical disk. It is anticipated that two wavelengths of $\lambda_1 = 635$nm and $\lambda_2 = 860$nm will be used. However, other wavelengths or dimensions could be used to satisfy the above formulas if desired in alternate embodiments.

Fig. 12 illustrates the determination of the placement of the photodetectors at different distances $r_1$ and $r_2$ from lasers 610 and 620, respectively. This can be done in a similar manner as for Fig. 11, however using the following equations:

$$\tan\phi_1 = \frac{r_1}{D_L} \tag{5}$$

$$\tan\phi_2 = \frac{r_2}{D_L} \tag{6}$$

These equations can similarly be solved given a laser wavelength and choosing a spacing from hologram lens 152.

In both the examples of Figs. 11 and 12, the distance r is calculated to the center of four quadrant photodetectors 741, 642 and 641. In Fig. 12, the distance between lasers 610 and 620 does not affect the calculation of the placement of the photodetectors, but they should be close enough to each other to be within the tolerance of the objective lens. An objective lens with a tolerance of 0.2mm will be satisfied if the laser chips are symmetrically placed about the optical axis within a distance of _____ of each other.

As will be understood by those of skill in the art, the present invention may be embodied in other specific forms without departing from the essential characteristics thereof. For example, a surface emitting laser could be used in place of the laser and cleaved surface of Figs. 8 and 9.

## Claims

1. An optical head comprising:

    a first semiconductor laser mounted in said optical head capable of emitting a first laser beam having a first wavelength;
    a second semiconductor laser mounted in said optical head capable of emitting a second laser beam having a second wavelength;
    at least one photodetector mounted in said optical head;
    a hologram lens for diffracting a reflected laser beam to said at least one photodetector;
    said lasers and said at least one photodetector being spaced such that reflected laser beams of both said first and second wavelengths are directed to said at least one photodetector.

2. The optical head of claim 1 wherein said at least one photodetector comprises first and second photodetectors, said first photodetector being mounted a first distance from said first laser, said second photodetector being mounted a different, second distance from said second laser.

3. The optical head of claim 2 wherein said first and second photodetectors are each a four quadrant photodetector.

4. The optical head of claim 2 further comprising third and fourth photodetectors mounted on either side of said first photodetector for tracking.

5. The optical head of claim 2 further comprising a heatsink, said first and second lasers being mounted on a first surface of said heatsink, and said photodetector being mounted on a second surface of said heat sink which is normal to said first surface, wherein an emitting surface of said lasers and a surface of said detector are substantially in a single plane.

6. The optical head of claim 1 wherein said photodetector comprises a single photodetector, and said first and second lasers are mounted at different distances from said photodetector.

7. The optical head of claim 6 wherein said photodetector is a four quadrant photodetector.

8. The optical head of claim 6 further comprising second and third tracking photodetectors mounted on either side of said single photodetector.

9. The optical head of claim 6 wherein said photodetector has a surface in a different plane from an emitting surface of said lasers.

10. The optical head of claim 1 wherein said lasers and said at least one detector are mounted on a common substrate, and further comprising a reflective surface mounted between said lasers and said at least one detector for redirecting said first and second laser beams from said lasers.

11. The optical head of claim 10 wherein said reflective surface comprises a cleaved, 45 degree edge of a semiconductor chip containing said at least one photodetector.

12. The optical head of claim 10 wherein said at least one photodetector comprises first and second photodetectors, said first photodetector being mounted a first distance from said first laser, said second photodetector being mounted a different, second distance from said second laser.

13. The optical head of claim 12 wherein said first and second photodetectors are each a four quadrant photodetector.

14. The optical head of claim 12 further comprising third and fourth photodetectors mounted on either side of said first photodetector for tracking.

15. The optical head of claim 1 further comprising a rear-emission photodetector mounted behind said lasers.

16. The optical head of claim 1 further comprising:

   a three beam grating for dividing said reflected laser beam into three laser beams; and
   an objective lens for focusing said first and second laser beams onto a medium.

17. The optical head of claim 16 further comprising a mirror for changing the direction of said first and second laser beams and directing said first and second laser beams to said objective lens.

18. The optical head of claim 1 wherein a distance between said first and second lasers is determined according to the following formula:

$$\Delta = (D_L + d)\tan\phi_2 - r$$

wherein $\Delta$ = the spacing between the first and second lasers, $D_L$ = the distance between an emitting surface of the lasers and the hologram lens, d = a setback distance between a face of said photodetector and said emitting surface of said lasers, r = a distance between a center of said photodetector and said first lasers, and $\phi2$ = an angle between an emitted beam from said second laser and a diffracted beam from said hologram to said photodetector, said second laser being further from said photodetector than said first laser.

19. An optical pick up comprising:

   a first semiconductor laser mounted in said optical head capable of emitting a first laser beam having a first wavelength;
   a second semiconductor laser mounted in said optical head capable of emitting a second laser beam having a second wavelength;
   first and second photodetectors having at least four quadrants, said first photodetector being mounted a first distance from said first laser, said second photodetector being mounted a different, second distance from said second laser;

third and fourth photodetectors mounted on either side of said first photodetector for tracking;

a hologram lens for diffracting a reflected laser beam to said first and second photodetectors;

said lasers and said photodetectors being spaced such that reflected laser beams of both said first and second wavelengths are directed to said first and second photodetectors, respectively;

a rear-emission photodetector mounted behind said lasers;

a three beam grating for dividing said reflected laser beam into three laser beams; and

an objective lens for focusing said first and second laser beams onto a medium.

**20.** An optical pick up comprising:

a first semiconductor laser mounted in said optical head capable of emitting a first laser beam having a first wavelength;

a second semiconductor laser mounted in said optical head capable of emitting a second laser beam having a second wavelength;

a first photodetector having at least four quadrants, said first laser being mounted a first distance from said first photodetector, said second laser being mounted a different, second distance from said first photodetector, said lasers and said first photodetector being spaced such that reflected laser beams of both said first and second wavelengths are directed to said first photodetector;

second and third photodetectors mounted on either side of said first photodetector for tracking;

a hologram lens for diffracting a reflected laser beam to said photodetectors;

a rear-emission photodetector mounted behind said lasers;

a three beam grating for dividing said reflected laser beam into three laser beams; and

an objective lens for focusing said first and second laser beams onto a medium.

**21.** An optical pick up comprising:

a first semiconductor laser mounted on a substrate in said optical head capable of emitting a first laser beam having a first wavelength;

a second semiconductor laser mounted on said substrate in said optical head capable of emitting a second laser beam having a second wavelength;

a photodetector chip mounted on said substrate, said photodetector chip having a cleaved, 45 degree edge facing said lasers for reflecting said first and second laser beams, said photodetector chip containing first and second photodetectors having at least four quadrants, said first photodetector being mounted a first distance from said first laser, said second photodetector being mounted a different, second distance from said second laser;

third and fourth photodetectors mounted on either side of said first photodetector for tracking;

a hologram lens for diffracting a reflected laser beam to said first and second photodetectors;

said lasers and said photodetectors being spaced such that reflected laser beams of both said first and second wavelengths are directed to said first and second photodetectors, respectively;

a rear-emission photodetector mounted behind said lasers;

a three beam grating for dividing said reflected laser beam into three laser beams; and

an objective lens for focusing said first and second laser beams onto a medium.

FOCUS & TRACKING
ACTUATOR

LASER PEN

Fig. 1

Fig. 2

Fig. 3

Fig. 4

Fig. 5

Fig. 6

Fig. 7

Fig. 8

Fig. 9

16

Fig 10

EP 0 860 819 A2

Fig. 11

Fig. 12